# EUROPEAN PATENT APPLICATION

(11) **EP 4 485 837 A1**
(43) Date of publication of application: **01.01.2025**
(21) Application number: 22927735.5
(22) Date of filing: 24.02.2022
(51) Int. Cl.: H04L 5/14

(54) **DATA TRANSMISSION METHODS, AND APPARATUSES**

(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/077780
(87) International publication number: WO 2023/159449

(57) **Abstract**

Disclosed in the embodiments of the present disclosure are data transmission methods, and apparatuses. A method comprises: a terminal device determining subband configuration information; and according to the subband configuration information, transmitting uplink data and/or downlink data on a plurality of different subbands, wherein the subband configuration information comprises at least one of the following configuration information indicating the plurality of subbands: subband sizes, the number of the subbands, subband frequency-domain positions, and gap (Gap) position configurations, wherein a Gap position configuration is used for indicating a Gap in the frequency domain between a subband for uplink data transmission and an adjacent subband for downlink data transmission. By implementing the embodiments of the present disclosure, full-duplex operation based on the subbands can be achieved, and interference between the subbands is avoided.

## Description

### TECHNICAL FIELD

The disclosure relates to a field of communication technology, in particular to a method and an apparatus for data transmission.

### BACKGROUND

Duplexing mode enhancement is an important topic being studied by the 3rd generation partnership project (3GPP). The main idea is to transmit and receive data in one slot simultaneously.

In the related art, a full-duplex scheme is to perform uplink data transmission and downlink data transmission on different subbands. How to determine a subband configuration to realize the uplink data transmission and the downlink data transmission on different subbands is an urgent problem to be solved.

### SUMMARY

Embodiments of the disclosure provide a method and an apparatus for data transmission. With determining subband configuration information, a terminal device can implement a subband-based full-duplex operation, and effectively avoid interference between subbands.

In a first aspect, embodiments of the disclosure provide a method for data transmission, performed by a terminal device. The method includes: determining subband configuration information; perform uplink data transmission and/or downlink data transmission on a plurality of different subbands according to the subband configuration information; in which the subband configuration information includes indication of at least one piece of following configuration information of the plurality of subbands:
a subband size;
a number of subbands;
subband frequency domain locations; and
a gap location configuration, in which the gap location configuration indicates a gap between a subband for uplink data transmission and an adjacent subband for downlink data transmission in a frequency domain.

In this technical solution, the terminal device may perform the uplink data transmission and/or the downlink data transmission on the plurality of different subbands according to the determined subband configuration information. Thus, a subband-based full-duplex operation can be implemented, and interference between subbands can be avoided.

In a second aspect, embodiments of the disclosure provide another method for data transmission, performed by a network side device. The method includes: determining subband configuration information; in which the subband configuration information includes indication of at least one piece of the following configuration information of a plurality of subbands:
a subband size;
a number of subbands;
subband frequency domain locations; and
a gap location configuration, in which the gap location configuration indicates a gap between a subband for uplink data transmission and an adjacent subband for downlink data transmission in a frequency domain.

In is technical solution, the terminal device may perform the uplink data transmission and/or the downlink data transmission on the plurality of different subbands according to the determined subband configuration information. Thus, a subband-based full-duplex operation can be implemented, and interference between subbands can be avoided.

In a third aspect, embodiments of the disclosure provide a communication apparatus. The communication apparatus has an ability to implement part or all of functions of the terminal device in the method described in the first aspect. For example, the communication apparatus may have functions of some or all of the embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the communication apparatus includes: a transceiver module and a processing module. The processing module is configured to support the communication apparatus to perform corresponding functions in the above methods. The transceiver module is configured to support communication between the communication apparatus and other devices. The communication apparatus may further include a storage module coupled to the transceiver module and the processing module, and is configured to store necessary computer programs and data for the communication apparatus.

As an example, the processing module may be a processor. The transceiver module may be a transceiver or a communication interface. The storage module may be a memory.

In an implementation, the communication apparatus includes: a processing module, configured to determine subband configuration information; a transceiver module, configured to perform uplink data transmission and/or downlink data transmission on a plurality of different subbands according to the subband configuration information; in which the subband configuration information includes indication of at least one piece of following configuration information of the plurality of subbands:
a subband size;
a number of subbands;
subband frequency domain locations; and
a gap location configuration, in which the gap location configuration indicates a gap between a subband for uplink data transmission and an adjacent subband for downlink data transmission in a frequency domain.

In a fourth aspect, embodiments of the disclosure provide another communication apparatus. The communication apparatus has an ability to implement part or all of the functions of the network side device in the method described in the second aspect. For example, the communication apparatus may have functions of some or all of the embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the communication apparatus includes: a transceiver module and a processing module. The processing module is configured to support the communication apparatus to perform corresponding functions in the above methods. The transceiver module is configured to support communication between the communication apparatus and other devices. The communication apparatus may further include a storage module coupled to the transceiver module and the processing module, and is configured to store necessary computer programs and data for the communication apparatus.

In an implementation, the communication apparatus includes: a processing module, configured to determine subband configuration information; in which the subband configuration information includes indication of at least one piece of following configuration information of a plurality of subbands:
a subband size;
a number of subbands;
subband frequency domain locations; and
a gap location configuration, in which the gap location configuration indicates a gap between a subband for uplink data transmission and an adjacent subband for downlink data transmission in a frequency domain.

In a fifth aspect, embodiments of the disclosure provide a communicating device. The communicating device includes: a processor. When the processor calls computer programs stored in a memory, the method described in the first aspect above is implemented.

In a sixth aspect, embodiments of the disclosure provide a communicating device. The communicating device includes: a processor. When the processor calls computer programs stored in a memory, the method described in the second aspect above is implemented.

In a seventh aspect, embodiments of the disclosure provide a communication device. The communication device includes: a processor and a memory having computer programs stored thereon. The processor executes the computer programs stored in the memory, to cause the communication device to implement the method described in the first aspect above.

In an eighth aspect, embodiments of the disclosure provide a communication device. The communication device includes: a processor and a memory having computer programs stored thereon. The processor executes the computer programs stored in the memory, to cause the communication device to implement the method described in the second aspect above.

In a ninth aspect, embodiments of the disclosure provide a communication device. The communication device includes: a processor and an interface circuit. The interface circuit is configured to receive code instructions and transmit them to the processor. The processor is configured to run the code instructions to cause the communication device to perform the method described in the first aspect above.

In a tenth aspect, embodiments of the disclosure provide a communication device. The communication device includes: a processor and an interface circuit. The interface circuit is configured to receive code instructions and transmit them to the processor. The processor is configured to run the code instructions to cause the communication device to perform the method described in the second aspect above.

In an eleventh aspect, embodiments of the disclosure provide a data transmission system. The system includes the communication apparatus of the third aspect and the communication apparatus of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

In a twelfth aspect, embodiments of the disclosure provide a computer-readable storage medium. The computer-readable storage medium is configured to store instructions used by the above terminal device. When the instructions are executed, the terminal device is caused to implement the method of the first aspect.

In a thirteenth aspect, embodiments of the disclosure provide a readable storage medium. The readable storage medium is configured to store instructions used by the above network side device. When the instructions are executed, the network side device is caused to implement the method of the second aspect.

In a fourteenth aspect, embodiments of the disclosure provide a computer program product including computer programs is provided. When the computer programs are run by a computer, the computer is caused to implement the method of the first aspect.

In a fifteenth aspect, embodiments of the disclosure provide a computer program product including computer programs. When the computer programs are run by a computer, the computer is caused to implement the method of the second aspect.

In a sixteenth aspect, embodiments of the disclosure provide a chip system. The chip system includes at least one processor and an interface for supporting the terminal device in realizing the functions involved in the first aspect, e.g., determining or processing at least one of data or information involved in the method described above. In a possible design, the chip system further includes a memory. The memory is configured to store necessary computer programs and data of the terminal device. The chip system may consist of chips or may include a chip and other discrete devices.

In a seventeenth aspect, embodiments of the disclosure provide a chip system. The chip system includes at least one processor and an interface for supporting the network side device in realizing the functions involved in the second aspect, e.g., determining or processing at least one of data or information involved in the method described above. In a possible design, the chip system further includes a memory. The memory is configured to store necessary computer programs and data of the network side device. The chip system may consist of chips or may include a chip and other discrete devices.

In an eighteenth aspect, embodiments of the disclosure provide a computer program. When the computer program is running on a computer, the computer is caused to implement the method of the first aspect.

According to a nineteenth aspect, embodiments of the disclosure provide a computer program. When the computer program is running on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in embodiments of the disclosure or the background technologies is given below.
FIG. 1 is a structural diagram of a communication system of an embodiment of the disclosure.
FIG. 2 is a flowchart of a method for data transmission provided in an embodiment of the disclosure.
FIG. 3 is a flowchart of another method for data transmission provided in an embodiment of the disclosure.
FIG. 4 is a flowchart of yet another method for data transmission provided in an embodiment of the disclosure.
FIG. 5 is a flowchart of yet another method for data transmission provided in an embodiment of the disclosure.
FIG. 6 is a structural diagram of a communication apparatus provided in an embodiment of the disclosure.
FIG. 7 is a structural diagram of another communication apparatus provided in an embodiment of the disclosure.
FIG. 8 is a structural diagram of a chip provided in an embodiment of the disclosure.

### DETAILED DESCRIPTION

In order to better understand a method and an apparatus for data transmission disclosed in embodiments of the disclosure, a communication system to which embodiments of the disclosure are applicable is described below at first.

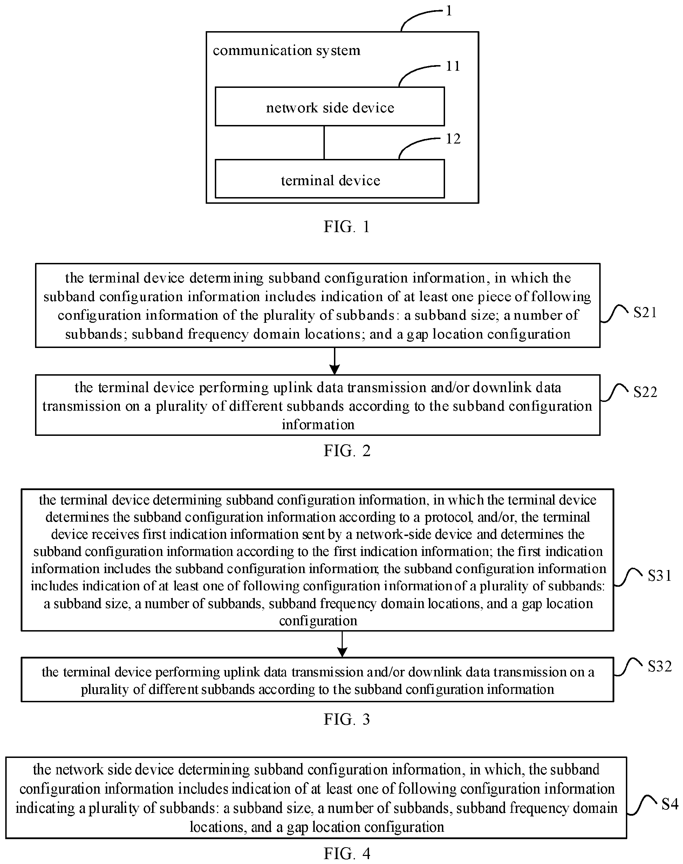

FIG. 1 is a structural diagram of a communication system 1 provided by an embodiment of the disclosure. The communication system may include, but is not limited to, one network device and one terminal device. The number and the form of devices illustrated in FIG. 1 are only for examples and do not constitute a limitation on embodiments of the disclosure, in practical applications, the system may include two or more network side devices and two or more terminal devices. The communication system 1 as illustrated in FIG. 1 includes, for example, one network side device 11 and one terminal device 12.

It is noteworthy that the technical solution of embodiments of the disclosure can be applied to various communication systems, such as, a long term evolution (LTE) system, a 5th generation (5G) mobile communication system, a 5G new radio (NR) system, or other future new mobile communication systems.

The network side device 11 in embodiments of the disclosure is an entity on a network side for transmitting or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network side device are not limited in embodiments of the disclosure. The network side device according to embodiments of the disclosure may be composed of a central unit (CU) and a distributed unit (DU). The CU may also be called as control unit. The use of CU-DU structure allows to divide a protocol layer of the network side device, such as a base station, such that some of the protocol layer functions are placed in the CU for centralized control, and some or all of the remaining protocol layer functions are distributed in the DU, and the DU is centrally controlled by the CU.

The terminal device 12 in embodiments of the disclosure is an entity on a user side for receiving or transmitting signals, such as a cellular phone. The terminal device may also be referred to as terminal, user equipment (UE), mobile station (MS), mobile terminal (MT), and the like. The terminal device can be a car with communication functions, a smart car, a mobile phone, a wearable devices, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in embodiments of the disclosure.

It is understandable that the communication system described in embodiments of the disclosure is intended to clearly illustrate the technical solutions according to embodiments of the disclosure, and does not constitute a limitation on the technical solution according to embodiments of the disclosure. It is understandable by those skilled in the art that as system architectures evolve and new service scenarios emerge, the technical solution according to embodiments of the disclosure are also applicable to the similar technical problem.

A method and apparatus for data transmission will be introduced in detail below with reference to the accompanying drawings.

FIG. 2 is a flowchart of a method for data transmission provided in an embodiment of the disclosure.

As illustrated in FIG. 2, the method is performed by a terminal device. The method includes, but is not limited to, the following steps.

At step S21, the terminal device determines subband configuration information. The subband configuration information includes indication of at least one piece of following configuration information of a plurality of subbands: a subband size, a number of subbands, subband frequency domain locations, and a gap location configuration.

In embodiments of the disclosure, the subband size is a size of a frequency range used by the terminal device for the uplink data transmission and/or the downlink data transmission. The number of subbands is the number of frequency ranges used by the terminal device for the uplink data transmission and the downlink data transmission. The subband frequency domain location is a location of the frequency range used by the terminal device for the uplink data transmission and the downlink data transmission in the frequency domain. The gap location configuration indicates a gap between a subband for the uplink data transmission and an adjacent subband for the downlink data transmission in the frequency domain.

In embodiments of the disclosure, a unit of the subband size may be a unit in absolute frequency size, e.g., MHz, Hz, etc., or a unit in logical size, e.g., one or more resource blocks (RBs), one or more RB sets, etc.

In embodiments of the disclosure, the terminal device may determine the subband configuration information according to a protocol, or determine the subband configuration information by receiving configuration information from a network side device, or determine the sub-band configuration information according to the protocol and the configuration information received from the network side device together.

In embodiments of the disclosure, the terminal device may determine other configuration information according to the subband configuration information including indication of one or more pieces of configuration information of the subband size, the number of subbands, the subband frequency domain locations, and the gap location configuration of the plurality of subbands. For example, the number of subbands or the subband frequency domain locations may be determined according to the subband size indicated in the subband configuration information. For example, the subband size or the subband frequency domain location may be determined according to the number of subbands indicated in the subband configuration information. For example, the number of subbands, the subband size, or the gap location configuration may be determined according to the subband frequency domain locations indicated in the subband configuration information.

For example, the terminal determines that the subband configuration information includes indication of a subband size of a plurality of subbands, and the terminal device may determine its corresponding system bandwidth, and may determine a number of subbands that are allowed in the system bandwidth according to the system bandwidth and the subband size. Thus, the number of subbands can be determined. Further, in a case where the system bandwidth, the number of subbands and the subband size are determined, the subband frequency domain location of each subband may be determined.

Certainly, the terminal device may also determine other information besides the system bandwidth, for example, a bandwidth part (BWP) for the terminal device, in a case of determining that the subband configuration information includes indication of the subband size of the plurality of subbands, the terminal device may determine the number of subbands, the subband frequency domain positions and the like.

It should be noted that, in embodiments of the disclosure, in a case that the terminal determines that the subband configuration information includes indication of the number of subbands of the plurality of subbands, the terminal device may determine the subband size, the subband frequency domain locations, and the like, according to the determined system bandwidth or BWP. Or, in embodiments of the disclosure, in a case that the terminal determines that the subband configuration information includes indication of the subband frequency domain locations of the plurality of subbands, the terminal device can directly determine the number of subbands, the subband size, the gap location configuration, and the like, according to the determined system bandwidth or BWP. Or, in embodiments of the disclosure, in a case that the terminal determines that the subband configuration information includes indication of the subband size and the gap location configuration of the plurality of subbands, the terminal device can directly determine the number of subbands, the subband frequency domain locations, and the like, according to the determined system bandwidth or BWP.

In embodiments of the disclosure, the terminal device may determine the subband configuration information according to a protocol and/or configuration information received from the network side device. The terminal device may also directly determine the subband configuration information including indication of one or more pieces of configuration information of the subband size, the number of subbands, the subband frequency domain locations, and the gap location configuration of the plurality of subbands. The terminal device directly determines a specific value of the subband size, and/or a specific value of the number of subbands, and/or specific values of the subband frequency domain locations, and/or specific values of a gap size and a gap location in the gap location configuration. Or, the terminal device may determine a configurable value of the subband size, and/or a configurable value of the number of subbands, and/or configurable values of the subband frequency domain locations, and/or configurable values of the gap size and the gap location in the gap location configuration.

It will be appreciated that in a case of determining the configurable value of the subband size, the subband size determined by the terminal device may be different values under different situations, and the specific value of the subband size may be determined according to the configured situation to meet different demands. The terminal device may determine the configurable value of the number of subbands, and/or the configurable values of the subband frequency domain locations, and/or the configurable values of the gap size and the gap location in the gap location configuration in the similar manner, to meet different demands.

The terminal device determines the subband configuration information. In a case that the gap location configuration is determined, the terminal device may determine the gap between the subband for the uplink data transmission and the adjacent subband for the downlink data transmission in the frequency domain. When the terminal device performs the uplink data transmission and the downlink data transmission, there is a gap between the subband for the uplink data transmission and the subband for the downlink data transmission, which can effectively avoid interference between uplink and downlink subbands.

At step S22, the terminal device performs the uplink data transmission and/or the downlink data transmission on the plurality of subbands according to the subband configuration information.

In embodiments of the disclosure, after determining the subband configuration information, the terminal device can perform the uplink data transmission and the downlink data transmission on different subbands according to the subband configuration information, and performs the uplink data transmission or the downlink data transmission according to the subband configuration information.

In embodiments of the disclosure, the terminal device determines the subband configuration and performs the uplink data transmission and/or the downlink data transmission on different subbands according to the subband configuration information. The subband configuration information includes indication of one or more pieces of configuration information of the subband size, the number of subbands, the subband frequency domain locations, and the gap location configuration of the plurality of subbands. The gap location configuration indicates the gap between the subband for the uplink data transmission and the adjacent subband for the downlink data transmission in the frequency domain. The terminal device may perform the uplink data transmission and/or the downlink data transmission on different subbands, and there is a gap between the subband for the uplink data transmission and the adjacent subband for the downlink data transmission in the frequency domain. Thus, a subband-based full-duplex operation can be implemented, and interference between subbands can be avoided.

In some embodiments, the subband size is a fixed value or a configurable value.

In the embodiments of the disclosure, the subband size may be a fixed value or a configurable value. The subband size is determined according to a protocol or a configuration from the network side device. The subband size determined according to a protocol or a configuration from the network side device may be the fixed value or the configured configurable value that is configured to satisfy a certain rule.

In some embodiments, in a case that the subband size is the configurable value, determining the subband configuration information includes: determining a BWP for the terminal device; receiving second indication information sent by the network side device, in which the second indication information indicates a frequency range of subbands on the BWP; and determining the frequency range as the subband size of each subband according to the second indication information.

In embodiments of the disclosure, the second indication information may be system information, a radio resource control (RRC) signaling, a media access control control element (MAC CE), or a physical layer signaling, etc.

In embodiments of the disclosure, in a case that the subband size is the configurable value, determining the subband size may include that the terminal device determines the BWP for the terminal device, receives the second indication information sent by the network side device that indicates a frequency range of subbands on the BWP, and determine the frequency range indicated by the second indication information as the subband size of each subband according to the second indication information.

For example, the terminal device determines that the BWP for the terminal device is 100 MHz, and receives the second indication information from the network side device which indicates that the frequency range of subbands on the BWP is 20 MHz, then, the terminal may determine that the subband size of each subband is 20 MHz according to the second indication information.

In some embodiments, in a case that the subband size is the configurable value, determining the subband configuration information includes: determining a system bandwidth, and determining a corresponding subband size according to a correspondence between the system bandwidth and the subband size.

In embodiments of the disclosure, the subband size may be the configurable value. After accessing to the system, the terminal device can determine the subband size according to the correspondence between the system bandwidth and the subband size.

For example, the correspondence is shown in Table 1 below.

**Table 1**

| Subband size | System bandwidth |
|---|---|
| 20MHz | 100MHz |
| 40MHz | 100MHz |
| ... | ... |

It is noted that the above examples are for illustrative purposes only and are not to be taken as a specific limitation on embodiments of the disclosure, and the correspondence between the subband size and the system bandwidth may also be other correspondences besides the above example.

In some embodiments, in a case that the subband size is the configurable value, determining the subband configuration information includes: determining a system operating frequency range, and determining a corresponding subband size according to a correspondence between the system operating frequency range and the subband size.

In some embodiments of the disclosure, the subband size is the configurable value. After accessing to the system, the terminal device determines the subband size according to the correspondence between the system operating frequency range and the subband size.

For example, the correspondence is shown in Table 2 below.

**Table 2**

| Subband size | System operating frequency range |
|---|---|
| 20MHz | FR1 |
| 40MHz | FR2 |
| ... | ... |

It is noted that the above examples are for illustrative purposes only and are not to be taken as a specific limitation on embodiments of the disclosure, and the correspondence between the subband size and the system operating frequency range may also be other correspondences besides the above example.

In some embodiments, in a case that the subband size is the configurable value, determining the subband configuration information includes: determining a system bandwidth, and determining a subband size according to the number of subbands and the system bandwidth.

In embodiments of the disclosure, in a case of determining the number of subbands supported by the system, the system bandwidth is determined, and the subband size is determined according to the number of subbands and the system bandwidth.

For example, in a case of determining that the number of subbands is 5 and the system bandwidth is 100MHz, the subband size is determined as 20MHz according to the number of subbands and the system bandwidth. Or, in a case of determining that the number of subbands is 5 and the system bandwidth is 200MHz, the subband size is determined as 40MHz according to the number of subbands and the system bandwidth.

In some embodiments, the number of subbands is a fixed value or a configurable value.

In embodiments of the disclosure, the number of subbands may be the fixed value or the configurable value. The number of subbands may be determined according to a protocol or a configuration from the network side device. The number of subbands determined according to the protocol or the configuration from the network side device may be the fixed value or the configured configurable value that is configured to satisfy a certain rule.

In some embodiments, in a case that the number of subbands is the configurable value, determining the subband configuration information includes: determining a BWP for the terminal device; receiving third indication information sent by the network side device, in which the third indication information indicates a number of the plurality of subbands on the BWP; and determining the number indicated by the third indication information as the number of subbands.

In embodiments of the disclosure, the third indication information may be system information, a RRC signaling, a MAC CE, or a physical layer signaling, etc.

In embodiments of the disclosure, in a case that the number of subbands is the configurable value, when determining the number of subbands, the terminal device determines the BWP for the terminal device, receives the third indication information sent by the network side device that indicates the number of the plurality of subbands on the BWP; and determines the number indicated by the third indication information as the number of subbands according to the third indication information.

For example, the terminal device determines that the BWP for the terminal device is 100 MHz, and receives the third indication information from the network side device which indicates that the number of the plurality of subbands on the BWP is 5, then the terminal device determines that the number of subbands is 5 according to the third indication information.

In some embodiments, determining the subband configuration information includes: determining a BWP for the terminal device, and determining the subband frequency domain location of each subband according to a location of the BWP, the subband size, the number of subbands, and a preset rule.

In embodiments of the disclosure, based on the location of the BWP, and given the number of subbands and the subband size, the subband frequency domain locations of respective subbands are determined sequentially according to the preset rule, and the preset rule may be a descending order of frequency ranges within the location of the BWP.

The preset rule may also be determining the subband frequency domain locations of respective subbands sequentially according to an ascending order of frequency ranges within the location of the BWP.

In some embodiments, determining the subband configuration information includes: determining a BWP for the terminal device; determining a reference point; receiving fourth indication information sent by the network side device, in which the fourth indication information indicates an offset of each subband relative to the reference point; and determining the subband frequency domain location of each subband according to a location of the BWP, the reference point, the offset of each subband relative to the reference point, and the subband size.

In embodiments of the disclosure, the fourth indication information may be system information, a RRC signaling, a MAC CE, or a physical layer signaling, etc.

In embodiments of the disclosure, the terminal device determining the reference point may include determining the reference point according to a protocol or received configuration information sent by the network side device. The reference point is an absolute frequency value.

After determining the reference point and the BWP, the terminal device obtains the offset of each subband with respect to the reference point according to the fourth indication information sent by the network side device, and may determine the frequency domain location of each subband on the basis of a known subband size.

In some embodiments, the gap size and the gap location are fixed values or configurable values.

In embodiments of the disclosure, the gap size and the gap location may be the fixed values respectively or the configurable values respectively. The gap size and the gap location may be determined according to a protocol or a configuration from the network side device. The gap size and the gap location determined according to a protocol or a configuration from the network side device may be the fixed values or the configurable values that are configured to satisfy a certain rule.

FIG. 3 is a flowchart of a method for data transmission provided by an embodiment of the disclosure.

As illustrated in FIG. 3, the method is performed by a terminal device. The method includes, but is not limited to, the following steps.

At step S31, the terminal device determines subband configuration information, in which the terminal device determines the subband configuration information according to a protocol, and/or, the terminal device receives first indication information sent by a network side device and determines the subband configuration information according to the first indication information. The first indication information includes the subband configuration information. The subband configuration information includes indication of at least one piece of following configuration information of the plurality of subbands: a subband size, a number of subbands, subband frequency domain locations, and a gap location configuration.

In embodiments of the disclosure, the terminal device may determine the subband configuration information according to the protocol, or determine the subband configuration information according to the first indication information received from the network side device, or determine the subband configuration information according to both the protocol and the first indication information received from the network side device.

At step S32, the terminal device performs uplink data transmission and/or downlink data transmission on a plurality of different subbands according to the subband configuration information.

The terminal device determining the subband configuration information according to the protocol and/or receiving the first indication information sent by the network side device and determining the subband configuration information according to the first indication information may include determining one or more of the subband size, the number of subbands, the subband frequency domain locations, and the gap location configuration according to the protocol, or determining one or more of the subband size, the number of subbands, the subband frequency domain locations, and the gap location configuration according to the first indication information, or determining one or more of a the subband size, the number of subbands, the subband frequency domain locations, and the gap location configuration according to both the protocol and the first indication information from the network side device.

In embodiments of the disclosure, the first indication information may be system information, a RRC signaling, a MAC CE, or a physical layer signaling, etc.

In some embodiments, the subband size is a fixed value or a configurable value.

In some embodiments, in a case that the subband size is the configurable value, determining the subband configuration information includes: determining a BWP for the terminal device; receiving second indication information sent by the network side device, in which the second indication information indicates a frequency range of subbands on the BWP; and determining the frequency range indicated by the second indication information as the subband size of each subband according to the second indication information.

In some embodiments, in a case that the subband size is the configurable value, determining the subband configuration information includes: determining a system bandwidth, and determining a corresponding subband size according to a correspondence between the system bandwidth and the subband size.

In some embodiments, in a case that the subband size is the configurable value, determining the subband configuration information includes: determining a system operating frequency range, and determining a corresponding subband size according to a correspondence between the system operating frequency range and the subband size.

In some embodiments, in a case that the subband size is the configurable value, determining the subband configuration information includes: determining a system bandwidth, and determining a subband size according to the number of subbands and the system bandwidth.

In some embodiments, the number of subbands is a fixed value or a configurable value.

In some embodiments, if the number of subbands is a configurable value, determining the subband configuration information includes: determining a BWP for the terminal device; receiving third indication information sent by the network side device, in which the third indication information indicates a number of a plurality of subbands on the BWP; and determining the number indicated by the third indication information as the number of subbands.

In some embodiments, determining the subband configuration information includes: determining a BWP for the terminal device, and determining a subband frequency domain location for each subband according to a location of the BWP, a subband size, a number of subbands, and a preset rule.

In some embodiments, determining the subband configuration information includes: determining a BWP for the terminal device; determining a reference point; receiving fourth indication information sent by the network side device, in which the fourth indication information indicates an offset of each subband relative to the reference point; and determining the subband frequency domain location of each subband according to a location of the BWP, the reference point, the offset of each subband relative to the reference point, and the subband size.

In some embodiments, a gap size and a gap location are fixed values or configurable values.

It should be noted that the relevant descriptions of steps S31 and S32 in the embodiments of the disclosure can be reference with the relevant descriptions of steps S21 and S22 of the above examples and will not be repeated herein.

FIG. 4 is a flowchart of a method for data transmission provided by an embodiment of the disclosure.

As illustrated in FIG. 4, the method is performed by a network side device. The method includes, but is not limited to, the following steps.

At step S4, the network side device determines subband configuration information. The subband configuration information includes indication of at least one of following configuration information of a plurality of subbands: a subband size, a number of subbands, subband frequency domain locations, and a gap location configuration.

In embodiments of the disclosure, the gap location configuration indicates a gap between a subband for uplink data transmission and an adjacent subband for downlink data transmission in a frequency domain.

The subband size is a size of a frequency range used by the terminal device for the uplink data transmission and the downlink data transmission. The number of subbands is the number of frequency ranges used by the terminal device for the uplink data transmission and the downlink data transmission. The subband frequency domain location is a location of the frequency range used by the terminal device for the uplink data transmission and the downlink data transmission in the frequency domain. The gap location configuration indicates a gap between a subband for the uplink data transmission and an adjacent subband for the downlink data transmission in the frequency domain.

In embodiments of the disclosure, a unit of the subband size may be a unit in absolute frequency size, e.g., MHz, Hz, etc., or a unit in logical size, e.g., one or more RBs, one or more RB sets, etc.

In embodiments of the disclosure, the terminal device may determine other configuration information according to the subband configuration information including indication of one or more pieces of configuration information of the subband size, the number of subbands, the subband frequency domain locations, and the gap location configuration of the plurality of subbands. For example, the number of subbands or the subband frequency domain locations may be determined according to the subband size indicated in the subband configuration information. For example, the subband size or the subband frequency domain location may be determined according to the number of subbands indicated in the subband configuration information. For example, the number of subbands, the subband size, or the gap location configuration may be determined according to the subband frequency domain locations indicated in the subband configuration information.

For example, the terminal determines that the subband configuration information includes indication of a subband size of a plurality of subbands, and the terminal device may determine its corresponding system bandwidth, and may determine a number of subbands that are allowed in the system bandwidth according to the system bandwidth and the subband size. Thus, the number of subbands can be determined. Further, in a case where the system bandwidth, the number of subbands and the subband size are determined, the subband frequency domain location of each subband may be determined.

Certainly, the terminal device may also determine other information besides the system bandwidth, for example, a bandwidth part (BWP) for the terminal device, in a case of determining that the subband configuration information includes indication of the subband size of the plurality of subbands, the terminal device may determine the number of subbands, the subband frequency domain positions and the like.

It should be noted that, in embodiments of the disclosure, in a case that the terminal determines that the subband configuration information includes indication of the number of subbands of the plurality of subbands, the terminal device may determine the subband size, the subband frequency domain locations, and the like, according to the determined system bandwidth or BWP. Or, in embodiments of the disclosure, in a case that the terminal determines that the subband configuration information includes indication of the subband frequency domain locations of the plurality of subbands, the terminal device can directly determine the number of subbands, the subband size, the gap location configuration, and the like, according to the determined system bandwidth or BWP. Or, in embodiments of the disclosure, in a case that the terminal determines that the subband configuration information includes indication of the subband size and the gap location configuration of the plurality of subbands, the terminal device can directly determine the number of subbands, the subband frequency domain locations, and the like, according to the determined system bandwidth or BWP.

In embodiments of the disclosure, the terminal device may determine the subband configuration information according to a protocol and/or configuration information received from the network side device. The terminal device may also directly determine the subband configuration information including indication of one or more pieces of configuration information of the subband size, the number of subbands, the subband frequency domain locations, and the gap location configuration of the plurality of subbands. The terminal device directly determines a specific value of the subband size, and/or a specific value of the number of subbands, and/or specific values of the subband frequency domain locations, and/or specific values of a gap size and a gap location in the gap location configuration. Or, the terminal device may determine a configurable value of the subband size, and/or a configurable value of the number of subbands, and/or configurable values of the subband frequency domain locations, and/or configurable values of the gap size and the gap location in the gap location configuration.

It will be appreciated that in a case of determining the configurable value of the subband size, the subband size determined by the terminal device may be different values under different situations, and the specific value of the subband size may be determined according to the configured situation to meet different demands. The terminal device may determine the configurable value of the number of subbands, and/or the configurable values of the subband frequency domain locations, and/or the configurable values of the gap size and the gap location in the gap location configuration in the similar manner, to meet different demands.

The terminal device determines the subband configuration information. In a case that the gap location configuration is determined, the terminal device may determine the gap between the subband for the uplink data transmission and the adjacent subband for the downlink data transmission in the frequency domain. When the terminal device performs the uplink data transmission and the downlink data transmission, there is a gap between the subband for the uplink data transmission and the subband for the downlink data transmission, which can effectively avoid interference between uplink and downlink subbands.

In embodiments of the disclosure, the terminal device determines the subband configuration and performs the uplink data transmission and/or the downlink data transmission on different subbands according to the subband configuration information. The subband configuration information includes one or more of the subband size, the number of subbands, the subband frequency domain locations, and the gap location configuration. The gap location configuration indicates the gap between the subband for the uplink data transmission and the adjacent subband for the downlink data transmission in the frequency domain. The terminal device may perform the uplink data transmission and/or the downlink data transmission on different subbands, and there is a gap between the subband for the uplink data transmission and the adjacent subband for the downlink data transmission in the frequency domain. Thus, a subband-based full-duplex operation can be implemented, and interference between subbands can be avoided.

In some embodiments, the subband size is a fixed value or a configurable value.

In some embodiments, in a case that the subband size is the configurable value, the method includes: sending second indication information to a terminal device, in which the second indication information indicates a frequency range of subbands on a BWP for the terminal device.

In some embodiments, the number of subbands is a fixed value or a configurable value.

In some embodiments, in a case that the number of subbands is the configurable value, the method includes: sending third indication information to a terminal device, in which the third indication information indicates a number of the plurality of subbands on the BWP for the terminal device.

In some embodiments, the method includes: sending fourth indication information to a terminal device, in which the fourth indication information indicates an offset of each subband relative to a reference point.

In some embodiments, a gap size and a gap location are fixed values or configurable values.

It should be noted that the relevant descriptions of step S4 in the embodiments of the disclosure can be reference with the relevant descriptions of steps S21 and S22 of the above examples, and will not be repeated here.

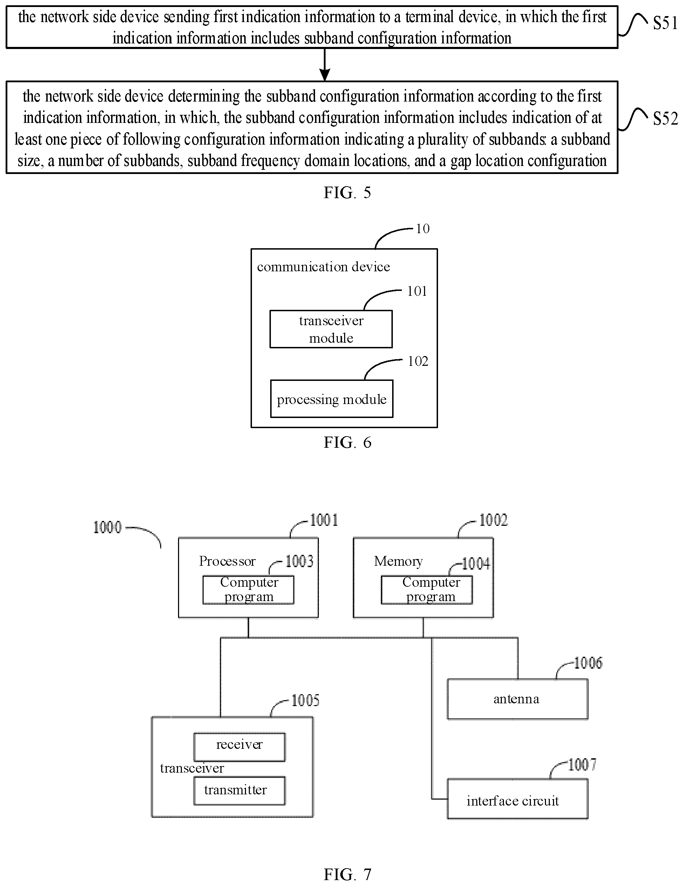

FIG. 5 is a flowchart of a method for data transmission provided by an embodiment of the disclosure.

As illustrated in FIG. 5, the method is performed by a network side device. The method includes, but is not limited to, the following steps.

At step S51, the network side device sends first indication information to a terminal device, in which the first indication information includes subband configuration information.

At step S52, the network side device determines the subband configuration information according to the first indication information. The subband configuration information includes indication of at least one piece of the following configuration information of a plurality of subbands: a subband size, a number of subbands, subband frequency domain locations, and a gap location configuration.

In embodiments of the disclosure, the gap location configuration indicates a gap between a subband for uplink data transmission and an adjacent subband for downlink data transmission in a frequency domain.

In embodiments of the disclosure, the subband configuration information includes indication of one or more pieces of the following configuration information of the plurality of subbands: the subband size, the number of subbands, the subband frequency domain locations, and the gap location configuration. The terminal device receives the first indication information sent by the network side device, and determines the subband configuration information according to the first indication information.

In some embodiments, the subband size is a fixed value or a configurable value.

In some embodiments, in a case that the subband size is the configurable value, the method includes: sending second indication information to the terminal device, in which the second indication information indicates a frequency range of subbands on a BWP for the terminal device.

In some embodiments, the number of subbands is a fixed value or a configurable value.

In some embodiments, in a case that the number of subbands is the configurable value, the method includes: sending third indication information to the terminal device, in which the third indication information indicates a number of the plurality of subbands on the BWP for the terminal device.

In some embodiments, the method includes: sending fourth indication information to the terminal device, in which the fourth indication information indicates an offset of each subband relative to a reference point.

In some embodiments, a gap size and a gap location are fixed values or configurable values.

It should be noted that the relevant descriptions of steps S51 and S52 in the embodiments of the disclosure can be reference with the relevant descriptions of steps S21 and S22 of the above examples, and will not be repeated here.

In the above embodiments of the disclosure, the method provided in the embodiments of the disclosure is described from the perspectives of the network side device and the terminal device, respectively. In order to implement each of the above-described functions in the method provided by the embodiments of the disclosure, the network side device and the terminal device may include a hardware structure and/or a software module, and implement each of the above-described functions in the form of a hardware structure, a software module, or a combination of the hardware structure and the software module. A certain function of the above functions may be performed in the form of a hardware structure, a software module, or a combination of the hardware structure and the software module.

FIG. 6 is a schematic diagram of a communication apparatus 10 provided by an embodiment of the disclosure. The communication apparatus 10 shown in FIG. 6 may include a transceiver module 101 and a processing module 102. The transceiver module 101 may include a sending module and/or a receiving module. The sending module is configured to realize a sending function, and the receiving module is configured to realize a receiving function. The transceiver module 101 may realize the sending function and/or the receiving function.

The communication apparatus 10 may be a terminal device, an apparatus in the terminal device, or an apparatus capable of being used in combination with the terminal device.

The communication apparatus 10 is a terminal device.

The apparatus includes: a processing module 102, configured to determine subband configuration information; in which the subband configuration information includes indication of at least one piece of following configuration information of a plurality of subbands:
a subband size;
a number of subbands;
subband frequency domain locations; and
a gap location configuration, in which the gap location configuration indicates a gap between a subband for uplink data transmission and an adjacent subband for downlink data transmission in a frequency domain; and
a transceiver module 101, configured to perform uplink data transmission and/or downlink data transmission on a plurality of different subbands according to the subband configuration information.

In some embodiments, the processing module 102 is configured to: determine the subband configuration information according to a protocol; and/or receive first indication information sent by a network side device, and determine the subband configuration information according to the first indication information, in which the first indication information includes the subband configuration information.

In some embodiments, the subband size is a fixed value or a configurable value.

In some embodiments, in a case that the subband size is the configurable value, the processing module 102 is configured to determine a BWP for the terminal device, and the transceiver module 101 is configured to receive second indication information sent by the network side device, in which the second indication information indicates a frequency range of subbands on the BWP. The processing module 102 is further configured to the frequency range as the subband size of each subband according to the second indication information.

In some embodiments, in a case that the subband size is the configurable value, the processing module 102 is configured to determine a system bandwidth, and determine a corresponding subband size according to a correspondence between the system bandwidth and the subband size.

In some embodiments, in a case that the subband size is the configurable value, the processing module 102 is configured to determine a system operating frequency range, and determine a corresponding subband size according to a correspondence between the system operating frequency range and the subband size.

In some embodiments, in a case that the subband size is the configurable value, the processing module 102 is configured to determine a system bandwidth, and determine a corresponding subband size according to the number of subbands and the system bandwidth.

In some embodiments, the number of subbands is a fixed value or a configurable value.

In some embodiments, in a case that the number of subbands is the configurable value, the processing module 102 is configured to determine a BWP for the terminal device. The transceiver module 101 is configured to receive third indication information sent by the network side device, in which the third indication information indicates a number of the plurality of subbands on the BWP. The processing module 102 is further configured to the number indicated by the third indication information as the number of subbands.

In some embodiments, the processing module 102 is configured to: determine a BWP for the terminal device, and determine the subband frequency domain location of each subband according to a location of the BWP, the subband size, the number of subbands, and a preset rule.

In some embodiments, the processing module 102 is configured to: determine a BWP for the terminal device and determine a reference point. The transceiver module 101 is configured to: receive fourth indication information sent by the network side device, in which the fourth indication information indicates an offset of each subband relative to the reference point. The processing module 102 is configured to: determine the subband frequency domain location of each subband according to a location of the BWP, the reference point, the offset of each subband relative to the reference point, and the subband size.

In some embodiments, a gap size and a gap location are fixed values or configurable values.

FIG. 6 is a structural diagram of another communication apparatus 10 provided by an embodiment of the disclosure. The communication apparatus 10 shown in FIG. 6 may include a transceiver module 101 and a processing module 102. The transceiver module 101 may include a sending module and/or a receiving module. The sending module is used to implement a sending function, and the receiving module is used to implement a receiving function. The transceiver module 101 may implement the sending function and/or the receiving function.

The communication apparatus 10 may be a network side device, an apparatus in the network side device, or an apparatus that can be used in combination with the network side device.

The communication apparatus 10 is a network side device.

The apparatus includes: a processing module 102, configured to determine subband configuration information; in which, the subband configuration information includes indication of at least one piece of following configuration information of a plurality of subbands:
a subband size;
a number of subbands;
subband frequency domain locations; and
a gap location configuration, in which the gap location configuration indicates a gap between a subband for uplink data transmission and an adjacent subband for downlink data transmission in a frequency domain.

In some embodiments, the transceiver module 101 is configured to: send first indication information to a terminal device, in which the first indication information includes the subband configuration information.

In some embodiments, the subband size is a fixed value or a configurable value.

In some embodiments, in a case that the subband size is the configurable value, the transceiver module 101 is configured to: send second indication information to a terminal device, in which the second indication information indicates a frequency range of subbands on a BWP for the terminal device.

In some embodiments, the number of subbands is a fixed value or a configurable value.

In some embodiments, in a case that the number of subbands is the configurable value, the transceiver module 101 is configured to: send third indication information to a terminal device, in which the third indication information indicates a number of the plurality of subbands on the BWP for the terminal device.

In some embodiments, the transceiver module 101 is configured to: send fourth indication information to a terminal device, in which the fourth indication information indicates an offset of each subband relative to a reference point.

In some embodiments, a gap size and a gap location are fixed values or configurable values.

With respect to the communication apparatus 10 in the above embodiments, the specific manner in which each module performs an operation has been described in detail in the embodiments relating to the method, and will not be described in detail herein.

The communication apparatus 10 provided in the above-described embodiments of the disclosure achieves the same or similar beneficial effects as the method for data transmission in some of the above-described embodiments, and will not be described in detail herein.

As illustrated in FIG. 7, FIG. 7 is a structural diagram of a communication device 1000 provided in an embodiment of the disclosure. The communication device 1000 may be a network side device, a terminal device, or a chip, a chip system or a processor that supports the network side device to realize the above-described methods, or a chip, a chip system or a processor that supports the terminal device to realize the above-described methods. The communication device 1000 may be used to realize the methods described in the above method embodiments with reference to the description of the above-described method embodiments.

The communication device 1000 may include one or more processors 1001. The processor 1001 may be a general purpose processor or a dedicated processor, such as, a baseband processor or a central processor. The baseband processor is used for processing communication protocols and communication data. The central processor is used for controlling the communication device (e.g., base station, baseband chip, terminal device, terminal device chip, DU, or CU), executing computer programs, and processing data of the computer programs.

Optionally, the communication device 1000 may include one or more memories 1002 on which computer programs 1004 may be stored. The processor 1001 executes the computer programs 1004 to cause the communication device 1000 to perform the methods described in the above method embodiments. Optionally, there may also be data stored on the memory 1002. The communication device 1000 and the memory 1002 may be provided separately or may be integrated together.

Optionally, the communication device 1000 may also include a transceiver 1005 and an antenna 1006. The transceiver 1005 may be referred to as transceiver unit, transceiver machine, or transceiver circuit, for realizing the transceiver function. The transceiver 1005 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication device 1000 may also include one or more interface circuits 1007. The interface circuits 1007 are used to receive code instructions and transmit them to the processor 1001. The processor 1001 runs the code instructions to cause the communication device 1000 to perform the method described in the method embodiments.

If the communication device 1000 is a terminal device, the processor 1001 is used to execute step S21 in FIG. 2 and step S31 in FIG. 3, and the transceiver 1005 is used to execute step S22 in FIG. 2 and S32 in FIG. 3.

If the communication device 1000 is a network side device, the transceiver 1005 is used to perform step S4 in FIG. 4 and step S51 in FIG. 5, and the processor 1001 is used to perform step S51 in FIG. 5.

In an implementation, the processor 1001 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1001 may also store computer programs 1003. When the computer programs are executed by the processor 1001, the communication device 1000 is caused to perform the methods described in the method embodiments above. The computer programs 1003 may be solidified in the processor 1001, in which case the processor 1001 may be implemented by hardware.

In an implementation, the communication device 1000 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a terminal device, but the scope of the communication device described in the disclosure is not limited thereto, and the structure of the communication device may not be limited by FIG. 7. The communication device may be a stand-alone device or may be part of alarger device. For example, the described communication device may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminal devices, smart terminal devices, cellular phones, wireless devices, handheld machines, mobile units, in-vehicle devices, network devices, cloud devices, artificial intelligence devices, and the like; and
(6) others.

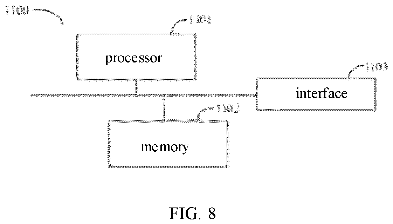

The case where the communication device may be a chip or a chip system may be referred to the schematic diagram of a chip shown in FIG. 8.

The chip 1100 includes a processor 1101 and an interface 1103. There may be one or more processors 1101, and there may be multiple interfaces 1103.

For the case where the chip is used to implement the functions of the terminal device in the embodiments of the disclosure,
the interface 1103 is configured to receive code instructions and transmit them to the processor; and
the processor 1101 is configured to run the code instructions to implement the method for data transmission of some of the above embodiments.

For the case where the chip is used to implement the functions of the network side device in the embodiments of the disclosure,
the interface 1103 is configured to receive code instructions and transmit them to the processor; and
the processor 1101 is configured to run the code instructions to implement the data transmission method of some of the above embodiments.

Optionally, the chip 1100 further includes a memory 1102 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

Embodiments of the disclosure also provide a location information update system. The system includes a communication apparatus as a terminal device and a communication apparatus as a network side device in the embodiment of FIG. 6. Or, the system includes a communication device as a terminal device and a communication device as a network side device in the embodiment of FIG. 7.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for data transmission, performed by a terminal device, comprising:
determining subband configuration information;
performing uplink data transmission and/or downlink data transmission on a plurality of different subbands according to the subband configuration information;
wherein the subband configuration information comprises indication of at least one piece of following configuration information of the plurality of subbands:
a subband size;
a number of subbands;
subband frequency domain locations; and
a gap location configuration, wherein the gap location configuration indicates a gap between a subband for uplink data transmission and an adjacent subband for downlink data transmission in a frequency domain.

2. The method of claim 1, wherein determining the subband configuration information comprises at least one of the following:
determining the subband configuration information according to a protocol; and
receiving first indication information sent by a network side device, and determining the subband configuration information according to the first indication information, wherein the first indication information comprises the subband configuration information.

3. The method of claim 1 or 2, wherein the subband size is a fixed value or a configurable value.

4. The method of claim 3, wherein, in a case that the subband size is the configurable value, determining the subband configuration information comprises:
determining a bandwidth part (BWP) for the terminal device;
receiving second indication information sent by a network side device, wherein the second indication information indicates a frequency range of subbands on the BWP; and
determining the frequency range as the subband size of each subband according to the second indication information.

5. The method of claim 3, wherein in a case that the subband size is the configurable value, determining the subband configuration information comprises:
determining a system bandwidth; and
determining a corresponding subband size according to a correspondence between the system bandwidth and the subband size.

6. The method of claim 3, wherein in a case that the subband size is the configurable value, determining the subband configuration information comprises:
determining a system operating frequency range; and
determining a corresponding subband size according to a correspondence between the system operating frequency range and the subband size.

7. The method of claim 3, wherein in a case that the subband size is the configurable value, determining the subband configuration information comprises:
determining a system bandwidth; and
determining a corresponding subband size according to the number of subbands and the system bandwidth.

8. The method of any one of claims 1-7, wherein the number of subbands is a fixed value or a configurable value.

9. The method of claim 8, wherein in a case that the number of subbands is the configurable value, determining the subband configuration information comprises:
determining a BWP for the terminal device;
receiving third indication information sent by a network side device, wherein the third indication information indicates a number of the plurality of subbands on the BWP; and
determining the number indicated by the third indication information as the number of subbands.

10. The method of any one of claims 1-9, wherein determining the subband configuration information comprises:
determining a BWP for the terminal device; and
determining the subband frequency domain location of each subband according to a location of the BWP, the subband size, the number of subbands, and a preset rule.

11. The method of any one of claims 1-9, wherein determining the subband configuration information comprises:
determining a BWP for the terminal device;
determining a reference point;
receiving fourth indication information sent by a network side device, wherein the fourth indication information indicates an offset of each subband relative to the reference point; and
determining the subband frequency domain location of each subband according to a location of the BWP, the reference point, the offset of each subband relative to the reference point, and the subband size.

12. The method of any one of claims 1-11, wherein a gap size and a gap location are fixed values or configurable values.

13. A method for data transmission, performed by a network side device, comprising:
determining subband configuration information;
wherein the subband configuration information comprises indication of at least one piece of following configuration information of a plurality of subbands:
a subband size;
a number of subbands;
subband frequency domain locations; and
a gap location configuration, wherein the gap location configuration indicates a gap between a subband for uplink data transmission and an adjacent subband for downlink data transmission in a frequency domain.

14. The method of claim 13, wherein determining the subband configuration information comprises:
sending first indication information to a terminal device, wherein the first indication information comprises the subband configuration information.

15. The method of claim 13 or 14, wherein the subband size is a fixed value or a configurable value.

16. The method of claim 15, wherein in a case that the subband size is the configurable value, the method comprises:
sending second indication information to a terminal device, wherein the second indication information indicates a frequency range of subbands on a BWP for the terminal device.

17. The method of any one of claims 13-16, wherein the number of subbands is a fixed value or a configurable value.

18. The method of claim 17, wherein in a case that the number of subbands is the configurable value, the method comprises:
sending third indication information to a terminal device, wherein the third indication information indicates a number of the plurality of subbands on a BWP for the terminal device.

19. The method of any one of claims 13-18, further comprising:
sending fourth indication information to a terminal device, wherein the fourth indication information indicates an offset of each subband relative to a reference point.

20. The method of any one of claims 13-19, wherein a gap size and a gap location are fixed values or configurable values.

21. A communication apparatus, comprising:
a processing module, configured to determine subband configuration information;
a transceiver module, configured to perform uplink data transmission and/or downlink data transmission on a plurality of different subbands according to the subband configuration information;
wherein the subband configuration information comprises indication of at least one piece of following configuration information of the plurality of subbands:
a subband size;
a number of subbands;
subband frequency domain locations; and
a gap location configuration, wherein the gap location configuration indicates a gap between a subband for uplink data transmission and an adjacent subband for downlink data transmission in a frequency domain.

22. A communication apparatus, comprising:
a processing module, configured to determine subband configuration information;
wherein the subband configuration information comprises indication of at least one piece of following configuration information of a plurality of subbands:
a subband size;
a number of subbands;
subband frequency domain locations; and
a gap location configuration, wherein the gap location configuration indicates a gap between a subband for uplink data transmission and an adjacent subband for downlink data transmission in a frequency domain.

23. A communication device comprising a processor and a memory having computer programs stored thereon, wherein when the computer programs are executed by the processor, the device is caused to implement the method of any one of claims 1-12, or when the computer programs are executed by the processor, the device is caused to implement the method of any one of claims 13-20.

24. A communication device, comprising: a processor and an interface circuit;
wherein the interface circuit is configured to receive code instructions and transmit the code instructions to the processor; and
the processor is configured to run the code instructions to implement the method of any one of claims 1-12, or run the code instructions to implement the method of any one of claims 13-20.

25. A computer-readable storage medium for storing instructions, wherein when the instructions are executed, the method of any one of claims 1-12 is implemented, or when the instructions are executed, the method of any one of claims 13-20 is implemented.
